# EUROPÄISCHE PATENTSCHRIFT

(11) **EP 3 280 618 B1**
(45) Veröffentlichungstag und Bekanntmachung des Hinweises auf die Patenterteilung: **15.01.2020**
(21) Anmeldenummer: 16711962.7
(22) Anmeldetag: 01.03.2016
(51) Int. Cl.: B60R 13/02

(54) **FIXIERHILFE ZUM EINFACHEN FIXIEREN VON NÄHKLEIDERN AUF TRÄGERTEILEN**
FIXING AID FOR SIMPLE FIXING OF SEWN COVERINGS ON SUPPORT PARTS
AUXILIAIRE DE FIXATION POUR LA FIXATION SIMPLE D'HABILLAGES COUSUS SUR DES ÉLÉMENTS SUPPORT

(30) Priorität: 08.04.2015 DE 202015002525 U; 21.09.2015 DE 202015006497 U
(43) Veröffentlichungstag der Anmeldung: 14.02.2018
(60) Teilanmeldung: 19154010.3
(73) Patentinhaber: Leather Components Vertriebs-Ug (Haftungsbeschränkt), 74538 Rosengarten (DE)
(72) Erfinder: SCHALLER, Wolfgang, 74523 Schwäbisch Hall (DE)
(74) Vertreter: Schmid, Barbara
(86) Internationale Anmeldenummer: PCT/DE2016/000090
(87) Internationale Veröffentlichungsnummer: WO 2016/162000

(56) Entgegenhaltungen:
- EP-A1- 1 508 436
- WO-A1-03/080312
- DE-A1-102010 034 598
- DE-U1- 20 307 988
- JP-A- 2001 197 970

## Beschreibung

### TECHNISCHES GEBIET

Die Erfindung betrifft ein Nähkleid zum Kaschieren von Trägerteilen (Formteilen). Unter Kaschieren versteht man das Verbinden mehrerer Lagen gleicher oder unterschiedlicher Materialien durch geeignete Kaschiermittel, insbesondere durch Klebstoff. Durch das Kaschieren kann ein Material geschützt oder dekoriert werden. Insbesondere in der Automobilindustrie werden im Innenraumbereich immer häufiger und großflächiger Bauteile kaschiert, um diese insbesondere mit Leder oder Lederimitaten, oder auch mit synthetischen Materialien zu dekorieren und diesen ein hochwertigeres Aussehen zu verleihen. Dies kann beispielsweise die Instrumententräger, die Mittelkonsolen, die Türen oder die Hutablagen betreffen. Anwendungen sind jedoch beispielsweise auch in der Luftfahrt- oder der Möbelindustrie denkbar. Insgesamt können Formpolster aus Schaum und Elastomeren aber auch harte Formbauteile kaschiert werden.

### STAND DER TECHNIK

Zum Kaschieren von Trägerteilen wird regelmäßig zunächst ein Nähkleid angefertigt, indem zwei oder mehrere Nähgüter (Bezugselemente) über eine Funktionsnaht miteinander verbunden werden. Durch die Funktionsnähte wird auf der Unterseite des Nähkleids ein Nahtstummel gebildet. Diese Nahtstummel können in eine dafür konstruierte Nut des Trägerteils, auch Nahtgraben genannt, eingelegt werden. Das Nähkleid muss exakt auf dem Trägerteil ausgerichtet werden. Dies erfolgt durch das Auflegen des Nähkleids auf dem Trägerteil, das anschließende Ausrichten der Funktionsnähte des Nähkleids und des Fixierens der ausgerichteten Funktionsnaht mittels Nahtschwertern. Das Nähkleid muss anschließend im Bereich der Funktionsnähte auf dem Trägerteil verklebt werden, indem der auf der Unterseite des Nähkleids vorhandene thermisch aktivierbare Klebstoff mittels eines Heißluftföns in der Umgebung der Funktionsnähte manuell aktiviert wird. Nach diesem Schritt kann die Funktionsnaht nicht mehr verrutschen. Auch das restliche Nähkleid wird mittels Heißluftfön und Aktivierung des thermisch aktivierbaren Klebstoffs auf dem Trägerteil vorfixiert. Anschließend kann das restliche Nähkleid mit dem Trägerteil prozesssicher kaschiert werden, was in der Regel über Distanz- oder Membrankaschieren mittels Wärmeeinbringung erfolgt. Durch die erforderliche manuelle Vorfixierung des Nähkleids auf dem Trägerteil ist das Kaschieren von Formteilen mittels Nahtschwertern zeit- und kostenintensiv. Das manuelle Vorfixieren erfordert eine große Übung des Bedieners, so dass lange Einlernphasen erforderlich sind.

Aus der DE 10 2012 100 891 A1 ist ein Nahtband bekannt, das zur Verstärkung von Ziernähten eingesetzt werden kann. Dieses Nahtband weist in seiner Längsrichtung eine Rippe oder Erhebung auf. Nach dem Befestigen des Nahtbandes auf der Unterseite des Nähkleids kann die freiliegende Rippe oder Erhebung in einen Nahtgraben des Trägerteils eingreifen und somit ebenfalls der Vorfixierung des Nähkleids auf dem Trägerteil dienen. Dies kann nur in solchen Bereichen stattfinden, in denen eine Ziernaht aufgesteppt wird.

Aus der DE 10 2013 014 687 A1 ist ein Verfahren zum Herstellen eines Nähkleids zum Kaschieren von Trägerteilen bekannt, bei dem der Nahtstummel nach dem Nähen der Funktionsnaht von einem Nahtband umhüllt wird, um die Funktionsnaht nachträglich zu stabilisieren. Das Nahtband kann mittels einer Klebeschicht an dem Nahtstummel befestigt werden, zusätzlich dazu kann das Nahtband durch die neben der Funktionsnaht befindlichen Ziernähte an dem Nähkleid angenäht werden.

Aus der DE 10 2004 053 133 A1 ist ein Nähkleid zum Kaschieren von Trägerteilen bekannt, bei dem im Bereich der Funktionsnaht ein Positionierelement an der Unterseite des Nähkleids angebracht wird. Das Positionierelement wird an den aufgebogenen Nahtstummel der Funktionsnaht von unten angenäht, wobei die dazu erforderlichen Nähte auch auf der Vorderseite, der Sichtseite des Nähkleids, sichtbar sind. Der Nahtstummel muss dadurch verhältnismäßig lang ausgebildet sein, was einen erhöhten Materialbedarf mit sich bringt. Die Positionierelemente werden somit nicht durch die Funktionsnähte gehalten, sondern sind vielmehr mit den Ziernähten an das Nähkleid genäht worden.

Die JP 2001 197970 A offenbart einen Bezug für einen Autositz, bei dem ein Klettband sowie ein Schaum in die Funktionsnaht eingenäht werden. Der von dem Klettband und dem Schaum umhüllte Nahtstummel wird in einen Nahtgraben eingesetzt und dort mit Hilfe eines zweiten Klettbandes, das am Grund des Nahtgrabens angeordnet ist, befestigt. Der Nahtgraben ist dabei breiter als der von Klettband und Schaum umhüllte Nahtstummel.

### DARSTELLUNG DER ERFINDUNG

Ausgehend von diesem vorbekannten Stand der Technik liegt der Erfindung die Aufgabe zugrunde, ein verbessertes Nähkleid zum Kaschieren von Trägerteilen anzugeben, der wirtschaftlich günstig hergestellt werden kann und möglichst einfach und rasch an dem Trägerteil vorfixiert werden kann.

Das erfindungsgemäße Nähkleid zum Kaschieren von Trägerteilen ist durch die Merkmale des Hauptanspruchs 1 gegeben. Sinnvolle Weiterbildungen der Erfindung sind Gegenstand von sich an diesen Anspruch anschließenden weiteren Ansprüchen.

Das erfindungsgemäße Nähkleid zum Kaschieren von Trägerteilen besitzt zumindest ein erstes und zumindest ein zweites Bezugselement, die über eine Funktionsnaht, insbesondere eine Steppnaht, miteinander verbunden sind. Die Funktionsnaht ist an der an dem Trägerteil anzulegenden Unterseite des Nähkleids vorhanden und bildet einen Nahtstummel aus den Randbereichen der beiden Bezugselemente. Dieser Nahtstummel wird zumindest abschnittsweise von einer Weicheinlage umhüllt. Das Fixieren der Weicheinlage kann insbesondere dadurch erfolgen, dass diese in die Funktionsnaht eingenäht wird.

Bei neuen Trägerteilen wird der Nahtgraben regelmäßig während der Entwicklungsphase dem Nahtstummel angepasst. Die Weicheinlage sorgt dafür, dass die Nahtstummel im Querschnitt verbreitert werden, so dass sich die Nahtstummel in den vorhandenen Nahtgräben fixieren lassen und dort eingequetscht werden können, so dass entlang aller Funktionsnähte eine Fixierung möglich ist. Die Nahtstummel sind somit sicher in einer Endposition fixiert und ausreichend fest mit dem Trägerteil verbunden, so das diese kaum mehr aus den Nahtgräben rutschen können. Das Einlegen der Nahtstummel in die Nahtgräben der Trägerteile kann dabei nach wie vor manuell erfolgen, wobei das Einquetschen der Weicheinlage in die Nahtgräben lediglich einen leichten manuellen Druck erfordert. Das Nähkleid kann dadurch ohne weitere Werkzeuge wie beispielsweise Nahtschwerter auf dem Trägerteil vorpositioniert werden, was das Auflegen der Nähkleider auf den Trägerteilen vereinfacht und beschleunigt. Darüber hinaus wird das Prozessrisiko minimiert, da ein nachträgliches Herausrutschen der Nähte aus den Nahtgräben in nachfolgenden Verfahrensschritten verhindert wird. Somit kann ein Fixieren der Flächen unmittelbar neben der Funktionsnaht entfallen. Das Vorpositionieren der Nähkleider ist somit sicher und reproduzierbar, was den Materialausschuss senkt und die Optik der kaschierten Trägerteile insgesamt erhöht. Auch ist es nicht länger erforderlich, die Nahtstummel zunächst in den Nahtgräben des Formteils mittels eines Heißluftföns vorzufixieren.

Bei der Weicheinlage kann es sich insbesondere um Filz, Leder, Kunststoff, Silikon, Karton, Pappe, Papier, Kautschuk, Granulate, Moosgummi, Vlies, Holz oder Schaumstoff handeln. Die Weicheinlage kann beispielsweise als textile Einlage aus synthetischen oder Naturmaterialien ausgebildet sein. Die Härte sowie die Dicke und die Festigkeit der Weicheinlage kann je nach Anwendungsfall unterschiedlich sein. Die Weicheinlage kann als Schaum, als Vlies, als verdichtetes Fasermaterial, als Gewirke, als Gewebe oder auch als Folie ausgebildet sein. Es wäre auch möglich, ein elektrisch leitfähiges Material als Weicheinlage zu verwenden. Dadurch könnte die Weicheinlage nach dem Fixieren beispielsweise durch das Anlegen einer Spannung expandieren, so dass ein Herausrutschen des Nähkleids aus dem Trägerteil zuverlässig verhindert werden kann.

Die Weicheinlage kann in einer besonders bevorzugten Ausführungsform zumindest abschnittsweise mit einem Verfestigungsmaterial versehen sein, um das maschinelle Verarbeiten der Weicheinlage insbesondere mittels einer Nähmaschine zu erleichtern. Das Verfestigungsmaterial hat dabei die Aufgabe, das Dehnungsverhalten der Weicheinlage so zu beeinflussen, dass sich die Weicheinlage nicht mehr beliebig dehnen oder stauchen lässt, was zu einem unsauberen Nähergebnis führen würde. Das Verfestigungsmaterial kann auf beiden Seiten der Weicheinlage vorhanden sein, oder auch nur auf der Ober- oder der Unterseite der Weicheinlage. Es kann vollflächig vorhanden sein, oder auch lediglich im Randbereich der Weicheinlage, in dem das Erfassen der Weicheinlage insbesondere durch die Nähmaschine erfolgt. Es wäre auch möglich, lediglich mittig der Weicheinlage ein solches Verfestigungsmaterial vorzusehen.

Bei dem Verfestigungsmaterial kann es sich insbesondere um ein Vlies, ein Gewirke, einen Schaum, eine Beflockung oder eine Folie halten. Es wäre auch möglich, ein flüssiges Verfestigungsmaterial zu verwenden, das sich nach dem Auftragen auf der Weicheinlage verfestigt. Vorzugsweise sollte das Verfestigungsmaterial ausreichend rutschfähig ausgebildet sein, um einen problemlosen und möglichst reibungsarmen Transport in der Nähmaschine zu ermöglichen.

Der Nahtstummel kann in einer besonders vorteilhaften Ausführungsform von einem Nahtband umhüllt werden, das durch die Funktionsnaht fixiert ist. Die zumindest abschnittsweise vorhandene Weicheinlage kann grundsätzlich zwischen Nahtband und Nahtstummel oder auch auf der Außenseite des Nahtbands vorhanden sein. Sofern die Weicheinlage auf der Außenseite des Nahtbands angeordnet ist, kann ein besonders guter Kontakt zur Nut des Formteils hergestellt werden. Auch die Verwendung eines Nahtbandes ohne Weicheinlage kann erhebliche Vorteile mit sich bringen, sofern das Nahtband gemeinsam mit der Funktionsnaht eingenäht wird und somit durch die Funktionsnaht fixiert wird. Die Ausführungsform eines Nähkleides mit einem Nahtstummel, der nur durch ein Nahtband umhüllt wird, das durch die Funktionsnaht fixiert wird, ist daher von eigenständiger erfinderischer Bedeutung. So kann auf diese Weise erstmals auch bei solchen Nähkleidern ein Nahtband verwendet werden, bei denen keine Ziernaht vorhanden sein soll. Bislang war eine Befestigung des Nahtbandes lediglich über eine Klebeschicht nicht als ausreichend angesehen worden, um eine reproduzierbare und sichere Befestigung des Nahtbandes an dem Nähkleid zu ermöglichen. Das Nahtband musste daher zwingend über die Ziernähte angenäht werden, so dass nur bei solchen Nähkleidern ein Nahtband möglich war, bei denen auch eine Ziernaht aufgebracht wurde. Dies ist jedoch nur bei einem verhältnismäßig geringen Anteil aller Nähkleider zum Kaschieren der Fall. Nunmehr können sämtliche Nähkleider, die zum Kaschieren von Trägerteilen eingesetzt werden sollen, mit einem Nahtband versehen werden, so dass eine Stabilisierung und Fixierung aller Funktionsnähte eines Nähkleides möglich wird.

Das Nahtband kann aus Naturmaterial oder einem Synthetik-Material bestehen oder solches zumindest enthalten. Auch eine Kombination aus Natur- und Synthetik-Material wäre denkbar. Das Nahtband kann eine Folie, ein Vlies, ein Gewirke oder ein Gewebe sein. Gegebenenfalls wäre auch eine Beschichtung des Nahtbands möglich. Es wäre auch möglich, ein elektrisch leitfähiges Material als Nahtband zu verwenden. Die Dicke des Nahtbandes kann insbesondere zwischen 0,1 Millimeter und 3 Millimeter betragen. Es wäre auch möglich, das Nahtband entsprechend dicker auszubilden.

In einer vorteilhaften Ausführungsform kann die zumindest eine Weicheinlage zwischen dem Nahtstummel und dem Nahtband vorhanden sein. Die vergleichsweise empfindliche Weicheinlage wird somit durch das Nahtband geschützt und kann nicht während der Verarbeitungsschritte zur Herstellung des Nähkleids beschädigt werden, was die spätere Funktion der Weicheinlage beeinträchtigen würde. Auch kann durch diese Anordnung ein besonders einfaches Hineingleiten des Nahtstummels in den Nahtgraben erreicht werden. Ein weiterer Vorteil ist der, dass der von Weicheinlage umhüllte Nahtstummel zwar etwas eingequetscht wird, das außen liegende Nahtband jedoch nach wie vor eine Verschiebung in Längsrichtung des Nahtgrabens ermöglicht, um eine exakte Ausrichtung zu ermöglichen.

Vorzugsweise kann die Weicheinlage lediglich im Bereich des Nahtstummels, nicht aber im Bereich der Funktionsnaht angeordnet sein. Das optische Nahtbild der Funktionsnaht bleibt somit wie gewünscht maximal unauffällig und es kann nicht versehentlich Weichenlage im Bereich der Funktionsnaht sichtbar sein. Darüber hinaus erhält die Funktionsnaht durch das eingenähte Nahtband mehr Stabilität und verläuft dadurch optisch geschlossener, gradliniger und ruhiger, so dass ein geschlossenes Nahtbild erreicht wird.

Der von Weicheinlage und gegebenenfalls auch von Nahtband umhüllte Nahtstummel kann dadurch einen etwa tropfenförmigen Querschnitt aufweisen, bei dem die Funktionsnaht eine Verjüngung bildet. Ein solcher Querschnitt kann besonders gut in Nahtgräben eingepresst gehalten werden. Auch könnten die Nahtgräben eine entsprechende Verjüngung aufweisen, was den Halt der Nahtstummel in den Nahtgräben zusätzlich verbessern würde.

In einer weiteren vorteilhaften Ausführungsform kann das Nahtband in Längsrichtung zumindest abschnittsweise perforiert ausgebildet sein. Eine mittig angeordnete Perforierung kann das Biegen des Nahtbandes beim Einnähen in die Funktionsnaht erleichtern, da sich das Nahtband mittig leichter falten lässt. Dadurch legt sich das Nahtband gleichmäßig auf beide Nahtfahnen, was dazu führt, dass das Nahtband beidseitig gleichermaßen gut von der Funktionsnaht erfasst werden kann. Auch lässt sich das Nähkleid nach dem Fertigstellen der Funktionsnaht durch die Perforation leichter in Kurven legen.

Durch die Perforierung kann die innenliegende Weicheinlage gegebenenfalls auch Kontakt zu dem Nahtgraben des Trägerteils erhalten. Dies führt zu einem zusätzlichen Anti-Rutsch-Effekt, der das Herausrutschen des Nahtstummels aus dem Nahtgraben und damit das Verrutschen des Nähkleids auf dem Trägerteil weiter erschwert. Dies kann insbesondere bei einer außermittigen Perforation des Nahtbands der Fall sein.

Zusätzlich dazu kann auch die Weicheinlage zumindest abschnittsweise perforiert ausgebildet sein, um das Biegen beim Einnähen in die Funktionsnaht insbesondere im Bereich von Rundungen weiter zu erleichtern.

Die Perforation von Nahtband und/oder Weicheinlage kann beispielsweise durch etwa winkelförmige Einschnitte oder eine Lochperforation realisiert werden. Auch eine Ausbildung des Nahtbandes und/oder der Weicheinlage mit Durchbrüchen verschiedener Form und/oder Größe oder mit Schlitzen würde eine solche Perforation ergeben.

Das Nahtband kann an die Randbereiche der einzelnen Bezugselemente aufgenäht werden, um ein schnelleres fixieren der Nähkleider in den Randbereichen (Umbugbereichen) herbeizuführen.

Die oben beschriebenen Maßnahmen lassen eine Reduzierung der Prozesszeiten beim Vorfixieren der Nähkleider um insgesamt bis zu 60 Prozent in der Serienproduktion zu. Auch kann auf die teuren Vorfixieranlagen mit Nahtschwerter verzichtet werden, wodurch sich die Anlagenkosten der Vorfixieranlagen um bis zu 80 Prozent reduzieren können. Statt der Vorfixieranlagen wird lediglich noch eine einfache Bauteilaufnahme benötigt, auf der das zu kaschierende Trägerteil aufgesteckt wird. Auch Personal- und Zeitkosten für die Vorfixierung können um bis zu 80 Prozent reduziert werden, da das Vorfixieren der Nähkleider auf den Trägerteilen mittels Nahtschwertern und Aktivierung der Klebeschichten der Funktionsnähte entfallen kann und der Prozess somit weniger Anlernzeit erfordert.

Vorzugsweise kann zumindest eine Ziernaht in dem Nähkleid vorhanden sein, die mit einem gewissen Abstand zur Funktionsnaht angeordnet ist und parallel zu der Funktionsnaht verläuft. Insbesondere können zwei Ziernähte vorhanden sein, die beidseitig der Funktionsnaht angeordnet sind. Die Ziernähte dienen dabei der optischen Belebung der Fläche des Nähkleids, da sie Akzente setzen und Konturen betonen. Ziernähte gelten zunehmend als Zeichen besonderer Produktqualität und stellen insbesondere im Innenbereich von Automobilen ein dekoratives Element der regelmäßig mit Leder oder Kunstleder kaschierten Trägerteile dar.

In einer besonders bevorzugten Ausführungsform kann das Nahtband an seiner dem Nahtstummel gegenüber liegenden Außenseite mit einem Klebemittel versehen sein. Dieses Klebemittel kann insbesondere thermisch aktivierbar sein und vorzugsweise einen niedrigen Schmelzpunkt aufweisen, damit eine Aktivierung des Klebemittels bereits bei verhältnismäßig geringen Temperaturen erfolgen kann. Dadurch kann beim eigentlichen Kaschiervorgang ein zusätzliches Verkleben des Nahtstummels in dem Nahtgraben erfolgen, wodurch ein nachträgliches Verrutschen des Nähkleids auf dem Trägerteil weiter erschwert wird. Bei dem Klebemittel kann es sich beispielsweise um eine PU-Folie (Polyurethan-Folie) oder um eine HotMelt-Folie handeln. Zusätzlich oder alternativ dazu könnte auch der Nahtgraben mit einem Klebemittel, beispielsweise auch mit einem doppelseitigen Klebeband, versehen werden, um die Funktionsnaht zusätzlich in dem Nahtgraben zu fixieren.

Die Herstellung eines solchen Nähkleids kann beispielsweise dadurch erfolgen, dass zunächst die Funktionsnaht angefertigt wird, dann in einem separaten Arbeitsschritt die Weicheinlage an dem Nahtstummel der Funktionsnaht befestigt wird und in einem letzten Schritt das Nahtband angenäht wird. Vorzugsweise können Weicheinlage und Nahtband jedoch bereits im Vorfeld aneinander befestigt werden, so dass die Befestigung von Nahtband und Weicheinlage in einem einzigen Verfahrensschritt erfolgen kann. Dabei kann das Nahtband mit Weicheinlage bereits beim Nähen der Funktionsnaht in diese eingenäht werden. Dies sorgt für ein ruhigeres und harmonischeres Erscheinungsbild der Funktionsnaht, da das Nahtband die Funktionsnaht zusätzlich stärkt. Auch erhält die Funktionsnaht mehr Stabilität und ist reißfester. Darüber hinaus sind auf diese Weise keine zusätzlichen Fertigungsschritte für die Herstellung der Funktionsnaht erforderlich.

Zum Herstellen eines oben beschriebenen Nähkleids kann beispielsweise ein Band verwendet werden, wie es in der DE 10 2012 100 891 A1 beschrieben ist. Die Weicheinlage kann dabei sowohl mittig als auch außermittig des Nahtbandes angeordnet sein. Im Gegensatz zu dem dort beschriebenen Band hat es sich jedoch als vorteilhaft herausgestellt, das Nahtband in Längsrichtung perforiert auszubilden.

Die Weicheinlage kann grundsätzlich bereits vorkonfektioniert an dem Nahtband vorhanden sein. Es wäre jedoch auch möglich, die Weicheinlage erst während des Nähprozesses der Funktionsnaht auf das Nahtband aufzubringen.

Darüber hinaus können vorzugsweise zwei Weicheinlagen an dem Nahtband vorhanden sein, die parallel zueinander und mit einem gewissen gegenseitigen Abstand angeordnet sind. Die Perforation des Nahtbandes kann in diesem Fall vorzugsweise im Bereich zwischen den beiden Weicheinlagen ausgebildet sein. Eine solche Ausführungsform mit zwei voneinander beabstandeten Weicheinlagen hat den Vorteil, dass sich der tropfenförmige Querschnitt der Funktionsnaht des Nähkleids besonders einfach und ausgeprägt ausbildet, da der Nahtstummel beidseitig durch die Weicheinlage verbreitert wird. Darüber hinaus muss der Nahtgraben des Trägerteils nicht so tief ausgebildet werden, da die Weicheinlage den Nahtstummel nicht vollständig umschließt, sondern lediglich an den Seiten des Nahtstummels vorhanden ist. Dadurch können die Nahtstummel besonders einfach und sicher in dem Nahtgraben des Trägerteils fixiert werden. Eine solche seitliche Quetschung des Nahtstummels wäre für die Befestigung somit ausreichend.

In der Regel können die zwei Weicheinlagen auf derselben Seite des Nahtbands vorhanden sein. Es wäre jedoch auch möglich, zwei oder mehrere Weicheinlagen auf unterschiedlichen Seiten des Nahtbands vorzusehen. Ein Teil der Weicheinlagen könnte in diesem Fall nach dem Einnähen zwischen dem Nahtband und dem Nahtstummel des Nähkleids vorhanden sein, während ein anderer Teil der Weicheinlagen an der Außenseite des Nahtbandes angeordnet wäre. Dadurch wäre es auch möglich, die einzelnen Weicheinlagen mit unterschiedlichen Oberflächen zu versehen, so dass gezielt eine gut rutschende Weicheinlage oder eine Weicheinlage mit Anti-Rutsch-Wirkung verwendet werden könnte.

Weitere Vorteile und Merkmale der Erfindung sind den in den Ansprüchen ferner angegebenen Merkmalen sowie den nachstehenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: eine Draufsicht auf eine erste Ausführungsform des erfindungsgemäßen Bandes,
- Fig. 2: einen Querschnitt durch das Band gemäß Fig. 1,
- Fig. 3: eine Draufsicht auf eine zweite Ausführungsform des erfindungsgemäßen Bandes,
- Fig. 4: eine Draufsicht auf eine dritte Ausführungsform des erfindungsgemäßen Bandes,
- Fig. 5: einen Querschnitt durch das Band gemäß Fig. 4,
- Fig. 6: eine Draufsicht auf eine vierte Ausführungsform des erfindungsgemäßen Bandes,
- Fig. 7: einen Querschnitt durch eine erste Ausführungsform des erfindungsgemäßen Überzugs mit einem Band gemäß Fig. 1 oder 3 vor dem Einlegen in die Nut eines Formteils,
- Fig. 8: einen Querschnitt durch den in die Nut eines Formteils eingelegten Überzug gemäß Fig. 7,
- Fig. 9: einen Querschnitt durch eine zweite Ausführungsform des erfindungsgemäßen Überzugs mit einem Band gemäß Fig. 4 oder 6,
- Fig. 10: einen Querschnitt durch eine dritte Ausführungsform des erfindungsgemäßen Überzugs,
- Fig. 11: einen Querschnitt durch eine vierte Ausführungsform des erfindungsgemäßen Überzugs,
- Fig. 12: einen Querschnitt durch eine fünfte Ausführungsform des erfindungsgemäßen Überzugs,
- Fig. 13: einen Querschnitt durch eine sechste Ausführungsform des erfindungsgemäßen Überzugs,
- Fig. 14: eine Draufsicht auf eine mit einem Verstärkungsmaterial beschichtete Weicheinlage und
- Fig. 15: einen Querschnitt durch die Weicheinlage gemäß Fig. 14.

### WEGE ZUM AUSFÜHREN DER ERFINDUNG

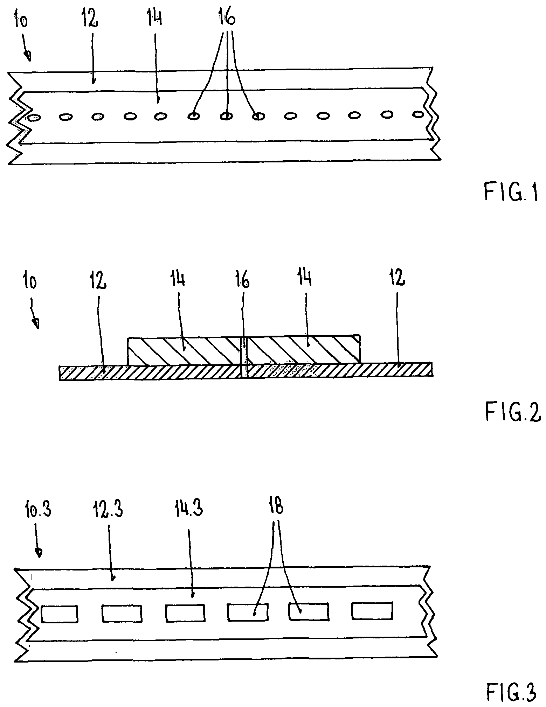

In den Fig. 1 und 2 ist eine erste Ausführungsform des erfindungsgemäßen Bandes 10 dargestellt. Das Band 10 besitzt ein Nahtband 12, das 0,1 bis 10,0 Millimeter dick ist. Vorzugsweise ist das Nahtband 12 zwischen 0,2 und 0,5 Millimeter dick, so dass sich das Nahtband 12 bei dem fertigen Nähkleid im an die Funktionsnaht anschließenden Bereich nicht abzeichnet. Mittig der Längsachse des Nahtbandes 12 ist eine Weicheinlage 14 angeordnet. Die Weicheinlage 14 kann zwischen 0,3 und 10,0 Millimeter dick sein. Im vorliegenden Beispielsfall ist die Weicheinlage 1,0 Millimeter dick.

Die Weicheinlage 14 ist im vorliegenden Beispielsfall auf das Nahtband 12 aufgeklebt vorhanden. Alternativ dazu könnte die Weicheinlage 14 auch auf das Nahtband 12 aufgenäht sein. Auch andere Befestigungsmöglichkeiten von Weicheinlage 14 und Nahtband 12 wären grundsätzlich möglich.

Im vorliegenden Beispielsfall ist sowohl im Nahtband 12 als auch in der Weicheinlage 14 mittig entlang der Längsachse des Nahtbandes 12 eine Perforation in Form von mehreren Durchbrüchen 16 vorhanden, die in einem Abstand von etwa 4,5 Millimetern vorhanden sind. Die Durchbrüche 16 bilden eine Perforation, so dass das Band 10 besonders einfach entlang seiner Längsachse geknickt werden kann. Dies erleichtert das Einnähen des Bandes 10 in eine Funktionsnaht, da sich das Nahtband 12 besser in der dafür vorgesehenen Einfasshilfe der Nähmaschine faltet. Bei dem Band 10.3 gemäß Fig. 3 ist die Perforation in Weicheinlage 14.3 und Nahtband 12.3 in Form von mehreren Schlitzen 18 ausgebildet. Der Abstand und die Größe der Schlitze 18 und der Durchbrüche 16 kann an die jeweiligen Gegebenheiten angepasst werden, beispielsweise an das zu nähende Material des Nähkleids oder an die Breite beziehungsweise das Material von Weicheinlage und Nahtband. Die Form der Durchbrüche 16 kann individuell gewählt werden.

Im Gegensatz zu diesen hier dargestellten Ausführungsbeispielen könnte auch lediglich das Nahtband 12, 12.3 oder lediglich die Weicheinlage 14, 14.3 eine Perforation in Form von Durchbrüchen 16 oder Schlitzen 18 aufweisen.

Bei den hier dargestellten Ausführungsbeispielen reicht die Weicheinlage 14, 14.3 nicht bis an den äußeren Rand des Nahtbandes 12, 12.3. Dadurch ist die Weicheinlage 14, 14.3 regelmäßig nicht im Bereich der Funktionsnaht vorhanden. Im Gegensatz dazu könnte die Weicheinlage auch über die gesamte Breite des Nahtbandes reichen. In diesem Fall wäre die Weicheinlage auch im Bereich der Funktionsnaht vorhanden.

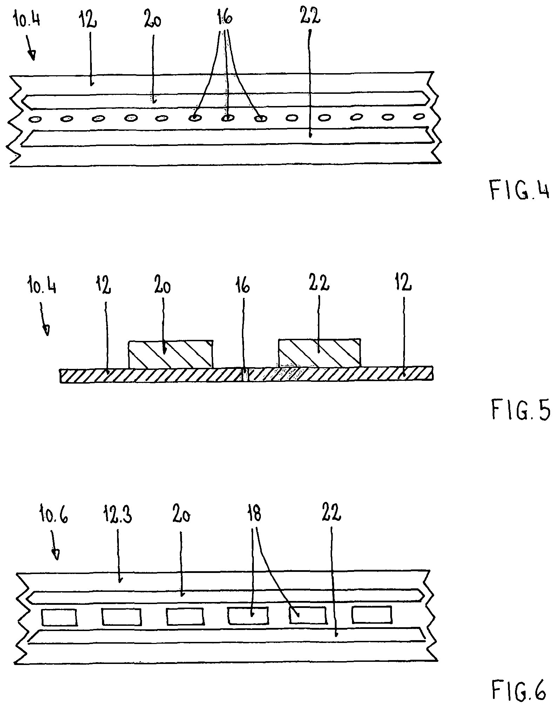

Eine alternative Ausführungsform des Bandes 10.4 gemäß den Fig. 4 und 5 sieht vor, insgesamt zwei Weicheinlagen 20, 22 an dem Nahtband 12 zu befestigen. Die beiden Weicheinlagen-Streifen 20, 22 verlaufen in diesem Fall parallel zueinander mit einem gewissen gegenseitigen Abstand. Entlang der Mittellinie des Nahtbandes 12 ist die Perforation in Form von Durchbrüchen 16 vorhanden, die von den Weicheinlagen-Streifen 20, 22 nicht verdeckt wird. Bei dem Band 10.6 gemäß Fig. 6 ist die Perforation in dem Nahtband 12.3 entsprechend Fig. 3 in Form von mehreren Schlitzen 18 ausgebildet.

Bei dem Band 10.4, 10.6 könnte im Gegensatz zu dem hier dargestellten Ausführungsbeispiel auf die mittige Perforation in Form von Durchbrüchen 16 und/oder Schlitzen 18 auch verzichtet werden, da das Nahtband 12, 12.3 in diesem Fall durch die im mittleren Bereich fehlende Weicheinlage bereits recht gut mittig geknickt werden kann.

Es wäre auch möglich, das Nahtband 12, 12.3 zusätzlich oder alternativ zu der mittigen Perforation mit einer seitlichen Perforation zu versehen, die im Bereich der Weicheinlage 14, 14.3 beziehungsweise 20, 22 vorhanden wäre. Eine solche seitliche Perforation könnte beispielsweise durch Durchbrüche, Schlitze oder sonstige Einschnitte realisiert werden. Durch diese seitliche Perforation kann die Weicheinlage 14, 14.3, 20, 22 in direkten Kontakt mit dem Nahtgraben des Trägerteils gelangen, was zu einer besseren Haftung des Nähkleids an der Nahtgrabenwand führt und die Vorfixierung des Nähkleids an dem Trägerteil weiter erleichtert.

Im Gegensatz zu den in den Fig. 4 bis 6 dargestellten Ausführungsformen könnte auch auf einen der beiden Weicheinlagen-Streifen 20, 22 verzichtet werden. In diesem Fall wäre die Weicheinlage nicht mehr genau mittig des Nahtbandes 12 vorhanden.

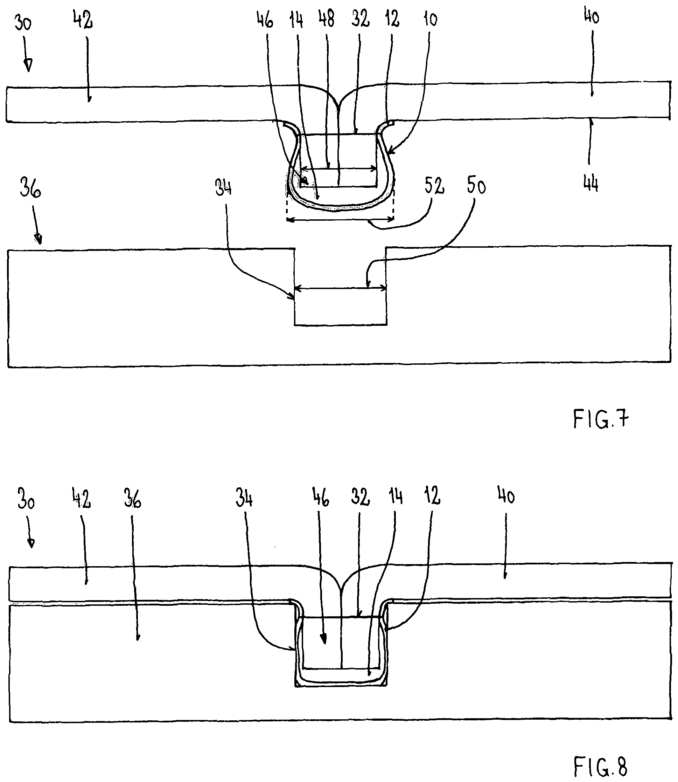

Fig. 7 und 8 zeigen eine erste Ausführungsform des erfindungsgemäßen Nähkleids 30 vor und nach dem Einlegen der Funktionsnaht 32 in einen Nahtgraben 34 eines Trägerteils 36. Das Nähkleid 30 besitzt zwei Bezugselemente 40, 42, die mittels einer Funktionsnaht 32 aneinander befestigt sind. Die beiden Bezugselemente 40, 42 sind im vorliegenden Beispielsfall aus Leder oder Kunstleder, grundsätzlich sind jedoch auch andere Materialien der Bezugselemente 40, 42 denkbar. Durch die Funktionsnaht 32 bildet sich an der Unterseite 44 ein Nahtstummel 46, auch Nahtfahne genannt. Die Breite 48 des Nahtstummels 46 ist regelmäßig etwas geringer als die Breite 50 des Nahtgrabens 34 des Trägerteils 36.

Der Nahtstummel 46 wird im vorliegenden Beispielsfall von einem Band 10 entsprechend Fig. 1 und 2 umhüllt. Das Nahtband 12 ist dabei direkt in die Funktionsnaht 32 eingenäht vorhanden. Die Breite der Weicheinlage 14 ist so gewählt, dass im Bereich der Funktionsnaht 32 keine Weicheinlage 14 vorhanden ist. Dies sorgt für eine harmonische und optisch ruhige Funktionsnaht. Durch die vorhandene Weicheinlage 14 entsteht ein etwa tropfenförmiger Querschnitt des von Weicheinlage 14 und Nahtband 12 umhüllten Nahtstummels 46, dessen maximale Breite 52 etwas größer ist als die Breite 50 der Nut 34 des Formteils 36.

Die Verankerung des Nähkleids 10 in dem Nahtgraben 34 des Trägerteils 36 (siehe Fig. 8) erfolgt durch eine Verdrängung der Weicheinlage 14 während des Hineinschiebens des Nahtstummels 46 in die dafür vorgesehene Nut 34. Dadurch kommt es zu einer Quetschung der Weicheinlage 14 und somit zu einer Arretierung des Nahtstummels 46 und damit auch des Überzugs 10 in dem dafür konstruierten Nahtgraben 34. Es kommt somit zu einer Positionierung der Funktionsnähte 32, die nun so vorfixiert sind, dass das restliche Nähkleid 10 ebenfalls vorfixiert werden kann.

Im Gegensatz zu dem hier dargestellten Ausführungsbeispiel könnte das Nähkleid 10 auch mittels eines herkömmlichen Nahtbandes und einer streifenförmigen Weicheinlage hergestellt werden, ohne dass Nahtband und Weicheinlage zunächst aneinander befestigt werden müssten. Nahtband und Weicheinlage könnten also erst während des Nähprozesses zum Fertigen der Funktionsnaht miteinander verbunden werden. In diesem Fall könnte eine erste Bandspule das Nahtband vorrätig halten und eine zweite Bandspule die Weicheinlage. Beide Bandspulen könnten übereinander, nebeneinander, hintereinander oder auch an unterschiedlichen Plätzen der Nähmaschine oder des Arbeitsplatzes angebracht werden, so dass Nahtband und Weicheinlage parallel zueinander und unmittelbar übereinander angeordnet in die Nähmaschine einlaufen würde. Die Weicheinlage und das Nahtband können im Werkzeug der Nähmaschine kontrolliert geführt werden, um den Randbereich der beiden Bezugselemente gelegt werden, und durch die Funktionsnaht an dem Nähkleid befestigt werden. Dabei kann es ausreichend sein, lediglich das Nahtband durch die Funktionsnaht zu befestigen, während die Weicheinlage quasi lose zwischen dem Nahtstummel und dem Nahtband zu liegen käme. Da das Nahtband jedoch ausreichend stramm an dem Nahtstummel anliegt, kann ein Verrutschen der Weicheinlage ausgeschlossen werden.

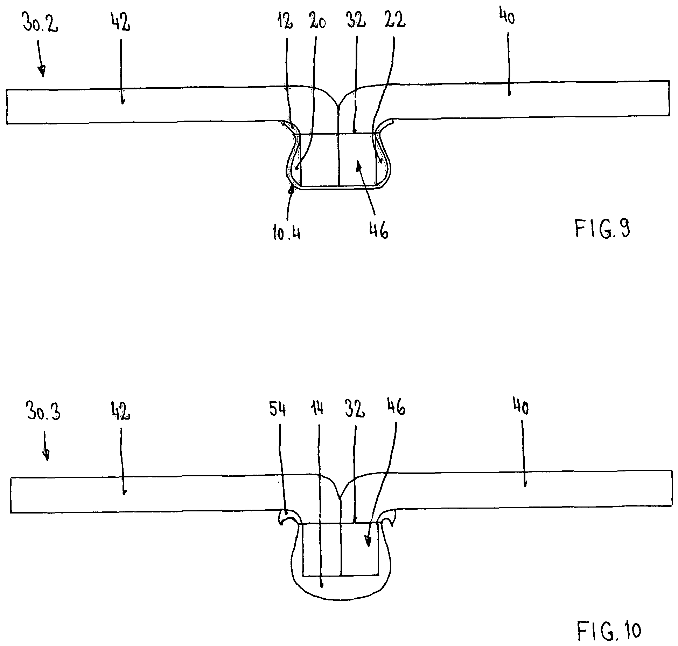

Eine zweite Ausführungsform des erfindungsgemäßen Nähkleids 30.2 ist in Fig. 9 dargestellt. Bei dem Nähkleid 30.2 wurde statt des Bandes 10 gemäß Fig. 1 das Band 10.4 gemäß Fig. 4 zum Umhüllen des Nahtstummels 46 verwendet. Auch dadurch kann ein etwa tropfenförmiger Querschnitt des von den beiden Weicheinlage-Streifen 20, 22 und dem Nahtband 12 umhüllten Nahtstummels 46 realisiert werden.

Entsprechend Fig. 10 kann bei einer alternativen Ausführungsform des Überzugs 30.3 auch lediglich eine Weicheinlage 14 verwendet werden. In diesem Fall wird die Weicheinlage 14 mittels der Funktionsnaht 32 an dem Nahtstummel 46 angenäht. Die Außenseite der Weicheinlage 14 kann mit einer Rutschbeschichtung versehen sein, um das Einnähen der Weicheinlage 14 in die Funktionsnaht 32 zu erleichtern. Die Weicheinlage könnte in diesem Fall auch durch ein weiches, dickes Nahtband mit einer Dicke von etwa 0,3 bis 5,0 Millimetern realisiert werden.

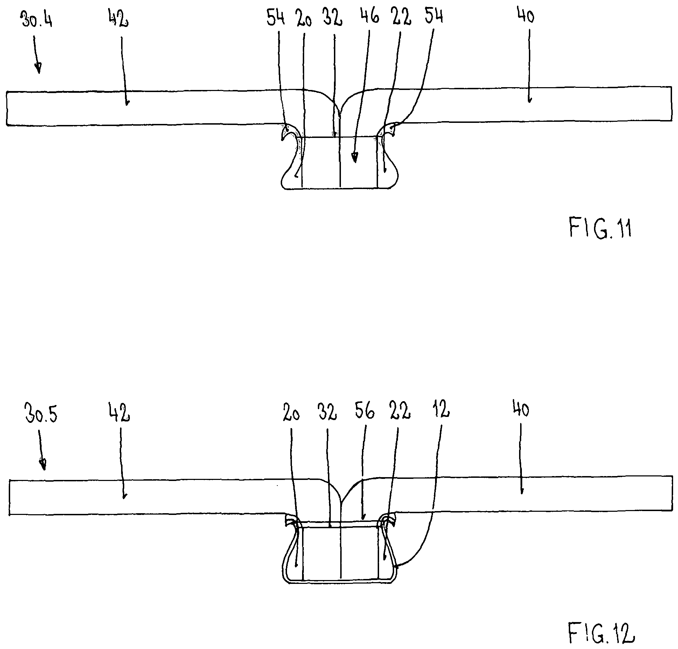

Es wäre auch möglich, an den beiden Außenseiten des Nahtstummels 46 jeweils einen Weicheinlagen-Streifen 20, 22 zu befestigen. Ein solches Nähkleid 10.4 ist in Fig. 11 dargestellt. Auch in diesem Fall können die beiden nach außen weisenden Seiten der Weicheinlagen-Streifen 20, 22 jeweils mit einer Rutschbeschichtung versehen werden. Die beiden Weicheinlagen-Streifen 20, 22 können beispielsweise auf die Unterseite der beiden Bezugselemente 40, 42 geklebt werden und beim Nähen der Funktionsnaht 32 von dieser mit erfasst werden. Es wäre auch möglich, die beiden Weicheinlagen-Streifen 20, 22 nicht durch die Funktionsnaht 32 zu erfassen; die Weicheinlagen-Streifen 20, 22 müssten dann auf andere geeignete Weise an dem Nahtstummel 46 fixiert werden. Dies kann beispielsweise durch einen Klebevorgang oder einen Heftvorgang erfolgen.

Sofern die Weicheinlagen-Streifen 20, 22 beziehungsweise die Weicheinlage 14 gemäß Fig. 10 nicht von der Funktionsnaht 32 erfasst wird, kann sich oberhalb der Funktionsnaht 32 auch kein Überwurf 54 bilden, der sich nach dem Kaschieren des Nähkleids 30.3, 30.4 an dem Trägerteil 36 auf der kaschierten, sichtbaren Oberfläche desselben abzeichnen könnte.

Das Nähkleid 30.4 gemäß Fig. 11 kann in einem zweiten Verarbeitungsschritt nachträglich mit einem Nahtband 12 versehen werden, so dass das in Fig. 12 dargestellte Nähkleid 30.5 entsteht. Dazu wird das Nahtband 12 über eine weitere Funktionsnaht 56 nachträglich angenäht. Die beiden Funktionsnähte 32, 56 können dabei etwa auf gleicher Höhe angeordnet werden, so dass sich von der Vorderseite des Nähkleids 10.5 ein optisch ansprechendes Bild ergibt.

In vergleichbarer Weise könnte auch das Nähkleid 10.3 gemäß Fig. 10 nachträglich mit einem Nahtband 12 versehen werden. Es wäre auch möglich, in Abwandlung von Fig. 11, lediglich auf einer Seite des Nahtstummels einen Weicheinlage-Streifen 20 oder 22 aufzubringen. Auch in diesem Fall wäre es möglich, den Nahtstummel nachträglich von einem Nahtband zu umschließen, um den einseitigen Weicheinlage-Streifen an dem Nahtstummel zu fixieren.

Alternativ wäre auch denkbar, den genähten Nahtstummel durch ein Silikontauchbad, ein Kunststofftauchbad oder ein Kautschuktauchbad zu führen, um eine geeignete Tropfenform zu erreichen. Es wäre auch möglich, eine Kunststoffummantelung aufzusprühen.

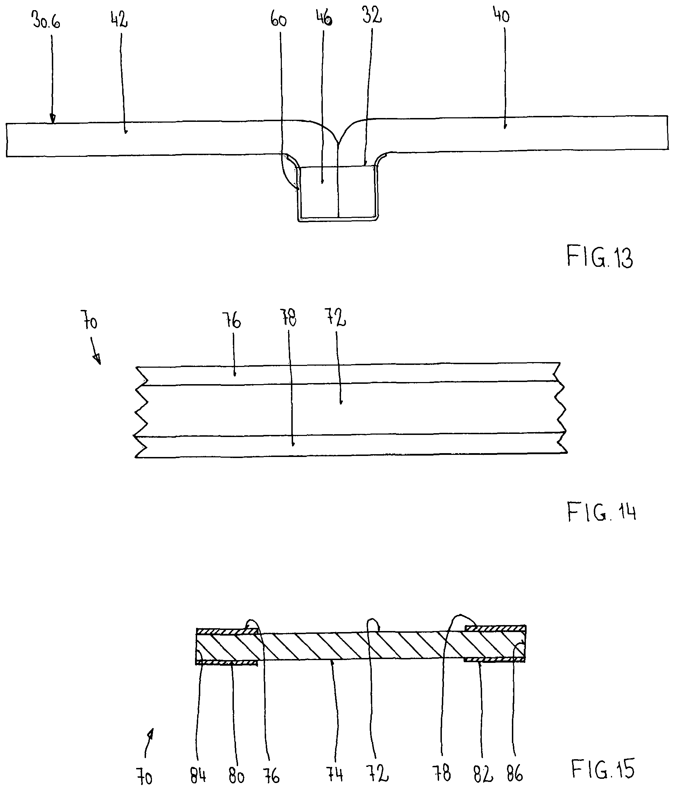

Eine sechste Ausführungsform des erfindungsgemäßen Nähkleids 30.6 ist in Fig. 13 dargestellt. Bei dem Nähkleid 30.6 wurde lediglich ein Nahtband 60 ohne zusätzliche Weicheinlage zum Umhüllen des Nahtstummels 46 verwendet. Das in die Funktionsnaht 32 eingenähte Nahtband 60 kann die Funktionsnaht 32 fixieren und stabilisieren und trägt somit zu einem optisch ansprechenden Bild des Nähkleids 30.6 bei.

In den Fig. 14 und 15 ist eine Weicheinlage 70 dargestellt, bei der auf die Verwendung eines zusätzlichen Nahtbandes verzichtet werden kann. Die Weicheinlage 70 ist im vorliegenden Beispielsfall sowohl auf ihrer Oberseite 72 als auch an ihrer Unterseite 74 jeweils mit zwei Verstärkungsstreifen 76, 78, 80, 82 beschichtet. Die Verstärkungsstreifen sind im vorliegenden Beispielsfall jeweils entlang der Längsränder der Weicheinlage 70 vorhanden; der mittlere Bereich der Weicheinlage 70 ist daher unbeschichtet. Sofern die Verstärkungsstreifen über ein Tauchbad auf der Weicheinlage 70 aufgetragen werden, könnten auch die Seitenränder 84, 86 der Weicheinlage entsprechend beschichtet sein. Im vorliegenden Beispielsfall bleiben die beiden Seitenränder 84, 86 unbeschichtet.

Im Gegensatz zu dem in Fig. 14 und 15 dargestellten Ausführungsbeispiel könnte die Weicheinlage 70 auch lediglich auf ihrer Oberseite 72 oder lediglich auf ihrer Unterseite 74 mit einem Verstärkungsmaterial beschichtet sein. Es wäre auch möglich, das Verstärkungsmaterial auf der gesamten Oberseite 72 und/oder auf der gesamten Unterseite 74 vorzusehen.

Die Beschichtung der Weicheinlage 70 dient dazu, dass sich die Weicheinlage 70 nicht unkontrolliert ausdehnen kann, was zu unsauberen Nähten und nicht reproduzierbaren Ergebnissen führen würde. Darüber hinaus kann die Beschichtung dafür sorgen, dass die Weicheinlage leicht durch das Werkzeug der Nähmaschine transportiert werden kann, so dass hohe Nähgeschwindigkeiten erreicht werden können.

## Patentansprüche

1. Trägerteil (36) und Nähkleid (30, 30.2, 30.3, 30.4, 30.5) zum Kaschieren des Trägerteils (36),
- wobei das Nähkleid (30, 30.2, 30.3, 30.4, 30.5) zumindest ein erstes und zumindest ein zweites Bezugselement (40, 42) aufweist, die über eine Funktionsnaht (32, 56) miteinander verbunden sind, so dass an der Unterseite (44) des Nähkleids (30, 30.2, 30.3, 30.4, 30.5) ein Nahtstummel (46) gebildet wird,
- wobei bei dem Nähkleid (30, 30.2, 30.3, 30.4, 30.5) zumindest abschnittsweise zumindest eine Weicheinlage (14, 14.3, 20, 22, 70) vorhanden ist, die entlang der Funktionsnaht (32) verläuft und in die Funktionsnaht (32) eingenäht ist,
- wobei das Trägerteil (36) einen Nahtgraben (34) aufweist,
- **dadurch gekennzeichnet, dass**
- die maximale Breite (52) des von der Weicheinlage (14, 14.3, 20, 22, 70) umhüllten Nahtstummels (46) größer ist als die Breite (50) des Nahtgrabens (34) des Trägerteils (36).

2. Trägerteil und Nähkleid nach Anspruch 1,
- **dadurch gekennzeichnet, dass**
- der durch die Funktionsnaht (32, 56) gebildete Nahtstummel (46) von einem Nahtband (12, 12.3, 60) umhüllt ist,
- das Nahtband (12, 12.3, 60) durch die Funktionsnaht (32, 56) fixiert ist.

3. Trägerteil und Nähkleid nach Anspruch 2,
- **dadurch gekennzeichnet, dass**
- die zumindest eine Weicheinlage (14, 14.3, 20, 22) zwischen dem Nahtstummel (46) und dem Nahtband (12, 12.3) vorhanden ist.

4. Trägerteil und Nähkleid nach Anspruch 2 oder 3,
- **dadurch gekennzeichnet, dass**
- im Bereich der Funktionsnaht (32) keine Weicheinlage vorhanden ist.

5. Trägerteil und Nähkleid nach einem der vorstehenden Ansprüche,
- **dadurch gekennzeichnet, dass**
- der von Weicheinlage (14, 14.3, 20, 22, 70) und / oder Nahtband (12, 12.3) umhüllte Nahtstummel (46) einen etwa tropfenförmigen Querschnitt aufweist.

6. Trägerteil und Nähkleid nach einem der Ansprüche 2 bis 5,
- **dadurch gekennzeichnet, dass**
- das Nahtband (12, 12.3) in Längsrichtung zumindest abschnittsweise perforiert ausgebildet ist.

7. Trägerteil und Nähkleid nach Anspruch 6,
- **dadurch gekennzeichnet, dass**
- die Weicheinlage (14) in Längsrichtung zumindest abschnittsweise perforiert ausgebildet ist.

8. Trägerteil und Nähkleid nach einem der vorstehenden Ansprüche,
- **dadurch gekennzeichnet, dass**
- zumindest eine Ziernaht vorhanden ist, die mit einem gewissen Abstand zur Funktionsnaht angeordnet ist.

9. Trägerteil und Nähkleid nach Anspruch 8,
- **dadurch gekennzeichnet, dass**
- Ziernaht und Funktionsnaht parallel zueinander angeordnet sind.

10. Trägerteil und Nähkleid nach einem der Ansprüche 2 bis 9,
- **dadurch gekennzeichnet, dass**
- das Nahtband an seiner Außenseite mit einem Klebemittel, insbesondere mit einem thermisch aktivierbaren Klebemittel, versehen ist.

## Claims

1. Support part (36) and sewn covering (30, 30.2, 30.3, 30.4, 30.5) for laminating the support part (36),
wherein the sewn covering (30, 30.2, 30.3, 30.4 30.5) has at least one first and at least one second cover element (40, 42) which are interconnected by way of a functional seam (32, 56), so that on the underside (44) of the sewn covering (30, 30.2, 30.3, 30.4, 30.5) a seam stump (46) is formed,
wherein in the case of the sewn covering (30, 30.2, 30.3, 30.4, 30.5) at least in portions at least one soft insert (14, 14.3, 20, 22, 70) is present which runs along the functional seam (32) and is sewn into the functional seam (32);
wherein the support part (36) has a seam trench (34),
**characterized in that**
the maximum width (52) of the seam stump (46) enveloped by the soft insert (14, 14.3, 20, 22, 70) is larger than the width (50) of the seam trench (34) of the support part (36).

2. Support part and sewn covering according to Claim 1,
**characterized in that**
the seam stump (46) that is formed by the functional seam (32, 56) is enveloped by a seam band (12, 12.3, 60);
the seam band (12, 12.3, 60) being fixed by the functional seam (32, 56).

3. Support part and sewn covering according to Claim 2,
**characterized in that**
the at least one soft insert (14, 14.3, 20, 22) is present between the seam stump (46) and the seam band (12, 12.3).

4. Support part and sewn covering according to Claim 2 or 3,
**characterized in that**
no soft insert is present in the region of the functional seam (32).

5. Support part and sewn covering according to one of the preceding claims,
**characterized in that**
the seam stump (46) that is enveloped by the soft insert (14, 14.3, 20, 22, 70) and/or the seam band (12, 12.3) has an approximately teardrop-shaped cross section.

6. Support part and sewn covering according to one of Claims 2 to 5,
**characterized in that**
the seam band (12, 12.3) in the longitudinal direction is configured so as to be perforated at least in portions.

7. Support part and sewn covering according to Claim 6,
**characterized in that**
the soft insert (14) in the longitudinal direction is configured so as to be perforated at least in portions.

8. Support part and sewn covering according to one of the preceding claims,
**characterized in that**
at least one decorative seam which is disposed at a certain spacing from the functional seam is present.

9. Support part and sewn covering according to Claim 8,
**characterized in that**
the decorative seam and the functional seam are disposed so as to be mutually parallel.

10. Support part and sewn covering according to one of Claims 2 to 9,
**characterized in that**
the seam band on the external side thereof is provided with an adhesive means, in particular with a thermally activatable adhesive means.

## Revendications

1. Élément de support (36) et revêtement à coudre (30, 30.2, 30.3, 30.4, 30.5) destiné à doubler l'élément de support (36),
- le revêtement à coudre (30, 30.2, 30.3, 30.4, 30.5) comportant au moins un premier et au moins un deuxième élément de référence (40, 42) qui sont reliés l'un à l'autre par une couture fonctionnelle (32, 56) de façon à former un bout à coudre (46) sur la face inférieure (44) du revêtement à coudre (30, 30.2, 30.3, 30.4, 30.5),
- au moins une garniture souple (14, 14.3, 20, 22, 70) étant présente au moins par endroits dans le revêtement à coudre (30, 30.2, 30.3, 30.4, 30.5), laquelle garniture s'étend le long de la couture fonctionnelle (32) et est cousue dans la couture fonctionnelle (32),
- l'élément de support (36) comportant une tranchée de couture (34),
- **caractérisés en ce que**
- la largeur maximale (52) du bout à coudre (46), enveloppé par l'insert souple (14, 14.3, 20, 22, 70), est supérieure à la largeur (50) de la tranchée de couture (34) de l'élément de support (36).

2. Élément de support et revêtement à coudre selon la revendication 1,
- **caractérisés en ce que**
- le bout à coudre (46) formé par la couture fonctionnelle (32, 56) est enveloppé par une bande à coudre (12, 12.3, 60),
- la bande à coudre (12, 12.3, 60) est fixée par la couture fonctionnelle (32, 56).

3. Élément de support et revêtement à coudre selon la revendication 2,
- **caractérisés en ce que**
- l'au moins une garniture souple (14, 14.3, 20, 22) est présente entre le bout à coudre (46) et la bande à coudre (12, 12.3).

4. Élément de support et revêtement à coudre selon la revendication 2 ou 3,
- **caractérisés en ce que**
- aucune garniture souple n'est présente dans la région de la couture fonctionnelle (32).

5. Élément de support et revêtement à coudre selon l'une des revendications précédentes,
- **caractérisés en ce que**
- le bout à coudre (46), entouré par la garniture souple (14, 14.3, 20, 22, 70) et/ou la bande à coudre (12, 12.3), présente une section transversale à peu près en forme de goutte.

6. Élément de support et revêtement à coudre selon l'une des revendications 2 à 5,
- **caractérisés en ce que**
- la bande à coudre (12, 12.3) est conçue pour être perforée au moins par endroits dans la direction longitudinale.

7. Élément de support et revêtement à coudre selon la revendication 6,
- **caractérisés en ce que**
- la garniture souple (14) est conçue pour être au moins partiellement perforée dans la direction longitudinale.

8. Élément de support et revêtement à coudre selon l'une des revendications précédentes,
- **caractérisés en ce que**
- au moins une couture décorative est présente qui est disposée à une certaine distance de la couture fonctionnelle.

9. Élément de support et revêtement à coudre selon la revendication 8,
- **caractérisés en ce que**
- la couture décorative et la couture fonctionnelle sont disposées parallèlement l'une à l'autre.

10. Élément de support et revêtement à coudre selon l'une des revendications 2 à 9,
- **caractérisés en ce que**
- la bande à coudre est pourvue sur côté extérieur d'un adhésif, en particulier d'un adhésif activable thermiquement.
